**Europäisches Patentamt**

**European Patent Office**

**Office européen des brevets**

(19)

(11) Numéro de publication: **0 023 863**
**B1**

(12) **FASCICULE DE BREVET EUROPEEN**

(45) Date de publication du fascicule du brevet: **13.04.83**

(51) Int. Cl.³: **B 60 N 1/06,** A 47 C 1/026

(21) Numéro de dépôt: **80401121.1**

(22) Date de dépôt: **29.07.80**

(54) **Dispositifs d'articulation des dossiers de siège.**

(30) Priorité: **02.08.79 FR 7919874**

(43) Date de publication de la demande:
**11.02.81 Bulletin 81/6**

(45) Mention de la délivrance du brevet:
**13.04.83 Bulletin 83/15**

(84) Etats contractants désignés:
**BE DE GB IT NL SE**

(56) Documents cités:
**FR - A - 2 258 817**
**FR - A - 2 285 829**

(73) Titulaire: **SOCIETE INDUSTRIELLE BERTRAND FAURE**
**Brières les Scellés**
**F-91150 Etampes (FR)**

(72) Inventeur: **Letournoux, Alain**
**3, rue de Rosette**
**F-45100 Saint Jean le Bland (FR)**
Inventeur: **Raye, Christian**
**15, Avenue Victor Hugo**
**F-91580 Etrechy (FR)**

(74) Mandataire: **Behaghel, Pierre et al,**
**CABINET PLASSERAUD 84 rue d'Amsterdam**
**F-75009 Paris (FR)**

Courier Press, Leamington Spa, England.

Dispositifs d'articulation des dossiers de siège

L'invention est relative aux dispositifs d'articulation des dossiers de siège, notamment pour véhicules automobiles, permettant re réglage de l'inclinaison de ces dossiers et le blocage de ceux-ci en leurs diverses positions réglées.

Elle vise plus particulièrement, parmi ces dispositifs d'articulation, ceux qui comprennent une manette de commande accessible de la personne assise sur le siège, une première couronne dentée intérieurement solidaire d'un flasque de l'assise, une deuxième couronne dentée intérieurement solidaire d'un flasque du dossier et coaxiable à la première couronne, des moyens de verrouillage actionnables par la manette de commande pour rendre à volonté les deux couronnes soit solidaires angularement l'une de l'autre, soit libres angulairement l'une par rapport à l'autre, moyens comportant d'une part *n* verrous dentés propres à coagir chacun avec les dents des deux couronnes et répartis régulièrement autour de l'axe commun de ces couronnes, à l'intérieur de celles-ci, à des écarts angulaires mutuels respectifs de l'ordre de 360°/n, *n* étant un entier au moins égal à 2 et de préférence égal à 3, et d'autre part une came plate rotative central actionnalbe par la manette de commande et propre à coagir avec ces verrous de façon soit à les écarter radialement de l'axe pour les mettre en prise avec les couronnes (position de verrouillage), soit au contraire à autoriser leurs rapprochements dudit axe qui les dégagent desdites couronnes (position de déverrouillage), et des moyens pour solliciter élastiquement la manette de commande et donc la came vers leur position correspondant au verrouillage du dispositif.

Elle vise plus particulièrement encore, parmi les dispositifs d'articulation considérés, ceux pour lesquels les verrous, de préférence la came, sont montés de façon à pouvoir flotter légèrement par rapport aux flasques selon des directions transversales, tout en étant calés axialement entre ces deux flasques.

Le montage légèrement "flottant" des verrous assure un dégagement centripède très facile de ces verrous hors des dentures des couronnes lors des déverrouillages, ainsi qu'un engrènement aisé de ces verrous dans ces dentures lors des verrouillages, et le montage légèrement flottant de la came garantit un engagement à fond des dents de chacun des verrous dans les dentures en regard des couronnes, même si les tolérances relatives aux cotes et au centrage mutuel des diverses pièces du mécanisme (came, verrous, couronnes) sont relativement larges.

Les articulations de ce genre présentent en outre l'avantage d'une suppression automatique de la totalité des jeux à l'état verrouillé.

Une telle articulation a, par exemple, été décrite dans le brevet FR—A—2 258 817 de la demanderesse.

La présente invention propose, pour les articulations de ce genre, un mode de centrage relatif particulièrement intéressant des flasques et de la came rotative, ce qui simplifie considérablement les opérations de montage et de démontage en réduisant le nombre des pièces du mécanisme.

Elle est essentiellement caractérisée en ce que la came plate rotative comprend, sur l'une de ses faces, un ressaut cylindrique de révolution propre à coagir avec un faible jeu avec un alésage complémentaire de l'un des flasques et, sur son autre face, un alésage cylindrique de révolution propre à coagir avec un faible jeu avec un ressuat complémentaire de l'autre flasque.

Dans des modes de réalisation préférés, on a precours en outre à l'une et/ou à l'autre des dispositions suivantes:

— le ressaut et l'alésage de la came se correspondent, ayant été obtenu simultanément par semi-découpe;
— chacun des jeux compris entre un alésage et un ressaut est de l'ordre de 0,1 mm;
— chacun des verrous est logé dans un guide radial faisant partie de l'un des flasques et encadrant ce verrou avec un jeu qui est, de préférence, de l'ordre de 0,2 mm;
— la came est soudée sur un bout d'arbre solidair de la manette commande;
— la came est solidaire d'un arbre traversant librement une ouverture dans le flasque à ressaut.

L'invention correspond, mises à part ces dispositions principales, à certaines autres dispositions qui s'utilisent de préférence en même temps et dont il sera plus explicitement question ci-après.

Dans ce qui suit, l'on va décrire deux modes de réalisation préférés de l'invention en se référant au dessin ci-annexé d'une manière bien entenu non limitative.

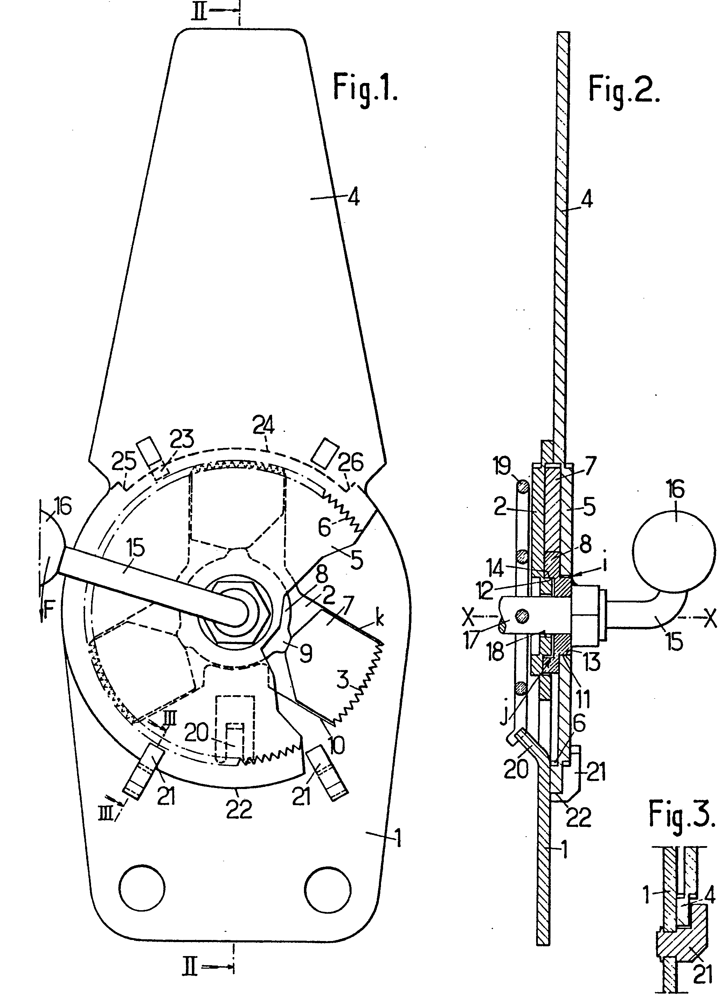

Les fig. 1 et 2, de ce dessin, montrent respectivement en vue latérale, portions arrachées, et en coupe axiale selon II—II fig. 1, une articulation de dossier de siège établie selon l'invention.

La fig. 3 montre un détail de cette articulation en coupe selon III—III fig. 1.

L'articulation en question comprend:

— un flasque vertical 1 destiné à être fixé sur l'ossature d'assise du siège, flasque dans lequel a été emboutie avec découpage partiel (procédé qui sera désigné par l'expression "semi-découpe" ci-après) une cuvette dont le fond plat est un disque circulaire 2 et dont le bord interne forme une denture intérieure 3; et
— un flasque vertical 4 destiné à être fixè sur

l'ossature du dossier du siège, flasque dans lequel a été semi-découpée une autre cuvette dont le fond plat est un disque circulaire 5 dont le bord interne forme une denture intérieure 6.

Ces deux flasques 1 et 4 sont disposés de façon telle que leurs dentures 3 et 6 soient juxtaposées horizontalement et admettent un même axe horizontal X s'étendant selon la largeur du siège.

Les deux disques 2 et 5 forment alors les deux parois verticales d'un boîtier plat circulaire.

C'est à l'intérieur de ce boîtier plat que sont disposés:

— d'une part, trois verrous dentés 7 propres à coagir respectivement avec trois portions, angulairement décalées de 120° autour de l'axe X, des deux dentures 3 et 6; et,

— d'autre part, une came rotative centrale 8 propre à coagir elle-même avec les verrous 7 de manière à commander leurs déplacements radiaux.

Ces verrous et cette came sont tous constitués par des plaquettes dont l'épaisseur est égale à la dimension axiale intérieure du boîtier de façon à pouvoir coulisser jointivement le long des faces en regard des deux disques 2 et 5 délimitant axialement ce boîtier.

En outre, les verrous 8 sont montés de façon à pouvoir se déplacer radialement par rapport à l'axe X,

— soit vers l'extérieur jusqu'à engrènement à fond de leurs denturs extérieures avec leurs deux dentures intérieures 3 et 6 lorsqu'ils sont repoussés par des bossages inclinés 9 de la came 8,

— soit vers ledit axe X lorsque ces bossages 9 sont escamotés angulairement après rotation de la came et qu'une sollicitation angulaire tendant à séparer les dentures en prise mutuelle est exercée sur le flasque 4 du dossier.

Ce montage des verrous 8 permettant leur coulissement radial est assuré de manière relativement lâche, c'est-à-dire de façon telle qu'ils puissent "flotter transversalement", ce qui évite les grippages ou coincements, et facilite aussi bien les engrènements mutuels des dentures que les dégagements mutuels de ces dentures en prise.

Un tel guidage peut être assuré par logement des verrous en question dans des guides à bords parallèles 10 rapportés sur l'un des deux disques 2 et 5 à l'intérieur du boîtier considéré, ou formés par emboutissage ou semi-découpe sur l'un de ces disques, la distance entre les bords de chaque guide 10 étant supérieure d'un jeu *k* à la largeur de chaque verrou.

Il peut également être assuré par coopération de pions rapportés sur les verrous avec des boutonnières évidées dans l'un des deux disques en question.

La came est également montée de façon à pouvoir flotter légèrement selon un direction transversale par rapport aux deux flasques 2 et 5 afin que les erreurs de fabrication dues à des tolérances de centrage relativement larges n'empêchent pas que la totalité des verrous 7 soient engagés à fond dans les dentures 3 et 6 en regard lors des verrouillages.

Ces différentes caractéristiques se retrouvent dans les articulations selon le brevet français mentionné ci-dessus, mais, dans les modes de réalisation qui ont été décrits dans ce brevet, les amplitudes des flottements transversaux des verrous et de la came étaient relativement grandes, ce qui nécessitait le recours à des moyens de centrage spéciaux pour des différents éléments.

Dans le cas présent, les amplitudes des flottements transversaux en question sont plus petites étant généralement comprises entre 0,05 et 0,5 mm, de préférence de l'ordre de 0,1 à 0,2 mm.

Quant au centrage relatif des différents éléments, il est assuré ici de la façon suivante.

La came plate 8 comprend un ressaut cylindrique de révolution 11 faisant saillie sur l'une de ses faces, et un alésage cylindrique de révolution 12 creusé dans son autre face.

Le ressaut 11 est introduit avec un léger jeu *i* dans un alésage complémentaire 13 évidé du centre du disque 5, et l'alésage 12 entoure avec un léger jeu *j* un ressaut cylindrique 14 prévu au centre du disque 2 et faisant saillie axialement vers la came.

Le ressaut 11 et l'alésage 12 de la came 8 sont de préférence obtenus par une même opération de semi-découpe, de sorte qu'ils se correspondent mutuellement avec, de préférence, un diamètre légèrement inférieur pour le ressuat.

C'est également par semi-découpe que le ressaut 14 est de préférence réalisé dans le disque 2.

La came 8 est soudée à la fois:

— sur une tige coudée 15 terminée par un bouton 16 et constituant la manette de commande, et

— sur un bout d'arbre 17 traversant axialement avec un jeu important une ouverture centrale 18 du disque 2, ce bout d'arbre étant propre à transmettre, directement ou non, les couples de commande de la manette 15 à un mécanisme analogue à celui décrit ici et disposé de l'autre côté du siège.

On voit encore sur les figures:

— un ressort spiral aplati 19 sollicitant constamment la mannette 15 dans le sens du verrouillage (flèche F), ressort formé par un fil de section circulaire dont les deux extrémités, parallèles, sont accrochées respectivement sur le bout d'arbre 17 par traversée diamétrale de celui-ci et sur une patte 20 crevée dans le flasque 1;

— deux équerres 21 soudées sur le flasque 1, propres à chevaucher jointivement le bord circulaire inférieur 22 du flasque 4, et une troisième équerre 23 soudée sur le flasque 4 et propre à chevaucher jointivement une portion circulaire échancrée 24 du bord supérieur du flasque 1, le rôle de ces trois équerres 21 et 23 étant de maintenir les deux flasques 1 et 4 axialement appliqués l'un contre l'autre, et la butée de l'équerre 23 contre les deux extrémités 25 et 26 de la portion échancrée 24 assurant les fins de courses angulaires du dossier.

Le fonctionnement de l'articulation décrite ci-dessus est le suivant.

En position verrouillée de repos, la sollicitation angulaire du ressort 19 dans le sens de la flèche F a pour effet d'appliquer les bossages 9 de la came 8 contre les verrous 7, ce qui met ces derniers en prise avec les dentures 3 et 6.

Le flasque 4 du dossier est alors bloqué angulairement, les sollicitations angulaires exercées sur celui-ci autour de l'axe X étant directement transmises de sa denture 6 à la denture fixe 3 par les verrous 7 eux-mêmes, qui sont en prise simultanément avec ces deux dentures.

Il est à noter qu'alors les jeux $k$ existant entre chaque verrou 7 et son guide 10 ne peuvent être la source d'aucun battement à l'occasion notamment des inversions de sens des sollicitations angulaires sur pe dossier, vu le mode de transmission signalé de ces sollicitations, lequel ne fait pas intervenir les flancs des verrous ni leurs guides.

Par ailleurs, du fiat des légers jeux $i$ et $j$ existant entre la came 8 et chacun des flasques 1 et 4, jeux qui sont supérieurs aux excentricités inévitables de fabrication entre les dentures 3, 6, ressauts 11, 14 et alésages 12, 13, chacun des trois verrous 7 est appliqué à fond dans les deux dentures 3 et 6 en regard.

Ces jeux sont automatiquement et intégralement supprimés pour la position verrouillée du méchanisme.

Ces deux dernières caractéristiques sont observées en particulier lorsque les couronnes dentées 3 et 6 sont identiques, c'est-à-dire présentent le même diamètre et le même nombre de dents, ce qui correspond au mode de réalisation préféré: dans une telle hypothèse, chacune des dents de chaque verrou s'étend axialement sur toute l'épaisseur de ce verrou, et ce sont respectivement les deux moitiès axiales de cette dent qui coopèrent respectivement avec les deux dentures 3 et 6.

Pour déverrouiller l'articulation, il suffit de déplacer la manette 15 dans le sens inverse de la flèche F, ce qui écarte angulairement les bossages 9 des talons des verrous 7 avec lesquels ils coopèrent.

La moindre sollicitation angulaire alors exercée sur le dossier autour de l'axe X chasse les verrous en direction de cet axe, ce qui déverrouille l'articulation: cette opération est facilitée par le montage librement flottant des verrous qui empêche tous coincements de ceux-ci.

On peut alors modifier à volonté l'inclinaison du dossier du siège, lequel est généralement appliqué contre le dos de l'usager par un ressort approprié non représenté.

Lorsque la position réglée désirée est atteinte, il suffit de relâcher la manette 15 pour que la détente du ressort 19 assure à nouveau le verrouillage de l'articulation: le flottement transversal des verrous permet d'amorcer très souplement les nouveaux engrènements entre ces verrous et les dentures 3 et 6, même lorsque les mises en regard radiales ne correspondent pas à une présentation exactement centrée d'une dent de verrou en face de chaque encoche de denture.

En suite de quoi, et quel que soit le mode de réalisation adopté, on obtient finalement une articulation dont la constitution et le fonctionnement résultent suffisamment de ce qui précède.

Cette articulation présente un certain nombre d'avantages par rapport à celles antérieurement conues, notamment les suivants:

— le nomber des pièces constitutives de cette articulation est particulièrement faible;
— le montage et le démontage de celle-ci est très simple: en particulier, il est possible de souder à l'avance la came 8 sur la manette 15 et le bout d'arbre 17, l'ensemble ainsi formé pouvant ensuite recevoir les deux flasques 1 et 4 enfilés axialement sur lui jusqu'à leurs applications respectives contre les deux faces de la came;
— la prévision de jeux multiples ($i$, $j$, $k$) facilite les manoeuvres et assure, en outre, une grande efficacité des verrouillages, la totalité de ces jeux étant automatiquement supprimée lors de ces verrouillages.

Comme il va de soi, et comme il résulte d'ailleurs déjà de ce qui précède, l'invention ne se limite nullement à ceux de ses modes d'application et de réalisation qui ont été plus particulièrement envisagés; elle en embrasse, au contraire, toutes les variantes.

**Revendications**

1. Dispositif d'articulation de dossier de siège, comprenant une manette (16) de commande accessible de la personne assise sur le siège, une première couronne dentée (2) intérieurement solidaire d'un flasque (1) de l'assise, une deuxième couronne dentée (5) intérieurement solidaire d'un flasque (4) du dossier et coaxiale à la première couronne, des moyens de verrouillage actionnables par la manette de commande pour rendre à volonté les deux couronnes soit solidaires angulairement l'une de l'autre, soit libres angulairement l'une par rapport à l'autre, moyens comportant d'une part *n* verrous dentés (7) propres à coagir chacun avec les dents (3, 6) des deux couronnes respectives et repartis régulièrement autour de l'axe commun de ces couronnes, à l'intérieur de celles-ci, à des écarts angulaires mutuels respectifs de l'ordre de 360°/n, *n* étant un entier au moins égal à 2, et, d'autre part, une came plate (8) rotative centrale actionnable par la manette de commande et propre à coagir avec ces verrous (7) de façon soit à les écarter radialement de l'axe (X) pour les mettre en prise avec les couronnes (3, 6) (position de verrouillage), soit, au contraire, à autoriser leurs rapprochements dudit axe qui les dégagent desdites couronnes (position de déverrouillage), et des moyens (19) pour solliciter élastiquement la manette de commande et donc la came (8) vers leur position correspondant au verrouillage, les verrous et la came étant montés de façon à pouvoir légèrement flotter transversalement par rapport aux flasques tout en étant calés axialement entre ces flasques, caractérisé en ce que la came plate rotative (8) comprend, sur l'une de ses faces, un ressaut cylindrique de révolution (11) propre à coagir avec un faible jeu (*i*) avec un alésage complémentaire (13) de l'un des flasques (4) et, sur son autre face, un alésage cylindrique de révolution (12) propre à coagir avec un faible jeu (*j*) avec un ressaut complémentaire (14) de l'autre flasque (1).

2. Dispositif d'articulation selon la revendication 1, caractérisé en ce que le ressaut (11) et l'alésage (12) de la came (8) se correspondent, ayant été obtenus simultanément par semi-découpe.

3. Dispositif d'articulation selon l'une quelconque des revendications 1 et 2, caractérisé en ce que chacun des jeux (*i*, *j*) compris entre un alésage et un ressaut est de l'ordre de 0,1 mm.

4. Dispositif d'articulation selon l'une quelconque des précédentes revendications, caractérisé en ce que chacun des verrous (7) est logé dans un guide radial (10) solidaire de l'un des flasques (1) et encadrant de verrou avec un jeu (*k*) qui est, de préférence, de l'ordre de 0,2 mm.

5. Dispositif d'articulation selon l'une quelconque des précédentes revendications, caractérisé en ce que la came (8) est soudée sur un bout d'arbre (15) solidaire de la manette de commande.

6. Dispositif d'articulation selon l'une quelconque des précédentes revendications, caractérisé en ce que la came (8) est solidaire d'un bout d'arbre (17) traversant librement une ouverture (18) évidée dans le flasque (1) à ressaut (14).

7. Dispositif d'articulation selon l'une quelconque des précédentes revendications, caractérisé en ce que les deux couronnes dentées (3 et 6) sont identiques.

**Patentansprüche**

1. Gelenkvorrichtung für Sitzlehnen, bestehend aus einem Verstellgriff (16), der für die auf dem Sitz befindliche Person zugänglich ist, einem ersten inneren Zahnkranz (3), der sich an einem Flansch (1) des Sitzteiles befindet, einem zweiten inneren Zahnkranz (6), der an einem Flansch (4) der Sitzlehne koaxial zu dem ersten Zahnkranz befestigt ist, Verriegelungseinrichtungen, die mit dem Verstellgriff betätigt werden können, um die beiden Zahnkränze nach Wunsch entweder in einer Winkelstellung miteinander zu verriegeln oder sie in eine Stellung zu bringen, in der sie sich frei zueinander drehen können und die einerseits n mit einer Zahnung versehene Verriegelungsstücke (7), die mit den Zähnen der beiden Kränze (3 bzw. 6) zusammenwirken können, regelmäßig um die den beiden Zahnkränzen gemeinsame Achse verteilt und im Inneren der Zahnkränze in Winkelabständen in der Größenordnung von 360°/n angeordnet sind, wobei n eine ganze Zahl von wenigstens zwei ist und andererseits eine drehbare mittlere Nockenscheibe (8) enthalten, die mittels des Verstellgriffes betätigbar ist und mit den Verriegelungsstücken (7) derart zusammenwirkt, daß diese entweder in radialer Richtung von der Achse (X) entfernt werden, um sie in Eingriff mit den Zahnkränzen (3, 6) zu bringen (Verriegelungsstellung) oder sich der Achse nähern, wobei die nicht in Eingriff mit den Zahnkränzen stehen (entriegelte Stellung), sowie aus Einrichtungen (19), um den Verstellgriff und damit die Nockenscheibe (8) elastisch in die Verriegelungsstellung zu drücken, wobei die Verriegelungsstücke und die Nockenscheibe so befestigt sind, daß sie in Querrichtung locker zu den Flanschen liegen, jedoch in axialer Richtung fest zwischen den Flanschen sitzen, dadurch gekennzeichnet, daß die drehbare Nockenscheibe (8) auf einer Oberfläche mit einem zylindrischen Ansatz (11) versehen ist, der mit leichtem Spiel (i) in einer entsprechenden Bohrung (13) des einen Flansches (4) angeordnet ist und auf der anderen Oberfläche eine zylindrische Bohrung (12) enthält, die mit leichtem Spiel (j) mit einem zylindrischen Ansatz (14) des anderen Flansches (1) zusammenwirkt.

2. Gelenkvorrichtung nach Anspruch 1, dadurch gekennzeichnet, daß der zylindrische Ansatz (11) und die diesem entsprechende Bohrung (12) der Nockenscheibe (8) gleichzeitig durch teilweises Ausstanzen hergestellt sind.

3. Gelenkvorrichtung nach einem der Ansprüche 1 und 2, dadurch gekennzeichnet, daß das Spiel (i) und das Spiel (j) zwischen den Bohrungen (12, 13) und den zylindrischen Ansätzen (11, 14) etwa 0,1 mm beträgt.

4. Gelenkvorrichtung nach einem der vorstehenden Ansprüche, dadurch gekennzeichnet, daß die Verriegelungsstücke (7) in radialen Führungen (10) angeordnet sind, die fest an dem einen Flansch (1) vorgesehen sind und die Verriegelungsstücke mit einem Spiel (k) umgeben, das vorzugsweise 0,2 mm beträgt.

5. Gelenkvorrichtung nach einem der vorhergehenden Ansprüche, dadurch gekennzeichnet, daß die Nockenscheibe (8) an ein Ende (15) der Welle angeschweißt ist, das fest mit dem Verstellgriff verbunden ist.

6. Gelenkvorrichtung nach einem der vorstehenden Ansprüche, dadurch gekennzeichnet, daß die Nockenscheibe (8) an einem Ende der Welle (17) angebracht ist, das frei durch eine Öffnung (18) in dem Flansch (1) geführt ist, der den zylindrischen Ansatz (14) enthält.

7. Gelenkvorrichtung nach einem der vorstehenden Ansprüche, dadurch gekennzeichnet, daß die beiden Zahnkränze (3 und 6) identisch sind.

## Claims

1. A seat back hinging device comprising a control handle (16) accessible to the person sitting in the seat, a first inner toothed ring (3) integral with a side-plate (1) of the sitting portion of the seat, a second inner toothed ring (6) integral with a side-plate (4) of the seat back portion and coaxial with said first ring, locking means actuable by the control handle to responsively cause said first and second rings to be either angularly locked or angularly free with respect to one another, said locking means comprising on the one hand $n$ toothed bolts (7) each adapted to coact with the teeth of said first and second rings (3, 6), said bolts being spaced apart evenly about the common axis of these rings interiorly thereof, at respective mutual angular distances of the other of $360°/n$, $n$ being a whole number at least equal to 2, and on the other hand a central rotary flat cam (8) actuable by said control handle and adapted to coact with said bolts (7) so as either to move them radially away from the axis (X) to put them in locking relationship with said first and second rings (3, 6) (locking position) or to cause them on the contrary to move radially nearer said axis thereby freeing them from said locking relationship (unlocked position) and means (19) for resiliently urging the control handle and so the cam (8) towards their position corresponding to said locking relationship, the bolts and the cam being mounted so as to able to float slightly transversely with respect to said first and second side-plates while being wedged axially therebetween, characterized in that the rotary flat cam (8) includes a cylindrical projection (11) on one of its faces adapted to coact with a complementary bore (13) in one of said side-plates (4) with a slight clearance (i) therebetween and, on its other face, a cylindrical bore (12) adapted to coact with a complementary projection (14) on the other of said side-plates (1) with a slight clearance (j) therebetween.

2. The hinging device according to Claim 1, characterized in that the projection (11) and the bore (12) of the cam (8) correspond, having been obtained simultaneously by semi-cutting out.

3. The hinging device according to any one of Claims 1 and 2, characterized in that each of the clearances (i, j) defined between a coacting bore and projection is about 0.1 mm.

4. The hinging device according to any one of the preceding claims, characterized in that each of the bolts (7) cooperates with a radial guide (10) integral with one of the side-plates (1), said guide straddling said bolt with a clearance (k) which is preferably about 0.2 mm.

5. The hinging device according to any one of the preceding claims, characterized in that the cam (8) is welded to a stub shaft (15) integral with the control handle.

6. The hinging device according to any one of the preceding claims, characterized in that the cam (8) is integral with a stub shaft (17) passing freely through an opening (18) provided in the side-plate (1) having the projection (14).

7. The hinging device according to any one of the preceding claims, characterized in that the two toothed rings (3 and 6) are identical.

Fig.1.

Fig.2.

Fig.3.